# EUROPÄISCHE PATENTSCHRIFT

(11) **EP 1 010 136 B1**
(45) Veröffentlichungstag und Bekanntmachung des Hinweises auf die Patenterteilung: **02.10.2002**
(21) Anmeldenummer: 98945049.9
(22) Anmeldetag: 29.07.1998
(51) Int. Cl.: G06K 19/07

(54) **VERFAHREN ZUR ECHTHEITSPRÜFUNG EINES DATENTRÄGERS**
METHOD FOR VERIFYING THE AUTHENTICITY OF A DATA MEDIUM
PROCEDE POUR VERIFIER L'AUTHENTICITE D'UN SUPPORT DE DONNEES

(30) Priorität: 08.08.1997 DE 19734507
(43) Veröffentlichungstag der Anmeldung: 21.06.2000
(73) Patentinhaber: Infineon Technologies AG, 81669 München (DE)
(72) Erfinder: SEDLAK, Holger, D-85658 Egmating (DE); BRÜCKLMAYR, Franz-Josef, D-87600 Kaufbeuren (DE)
(74) Vertreter: Epping Hermann & Fischer
(86) Internationale Anmeldenummer: DE9802147
(87) Internationale Veröffentlichungsnummer: WO99008230

(56) Entgegenhaltungen:
- EP-A- 0 451 024
- EP-A- 0 583 709
- EP-A- 0 600 646
- DE-A- 4 243 888
- GB-A- 2 211 643

## Beschreibung

Die Erfindung betrifft ein Verfahren zur Echtheitsprüfung eines Datenträgers, insbesondere einer Chipkarte, der zumindest einen Speicher aufweist, wobei ein spezifisches, physikalisches Merkmal des Datenträgers in verschlüsselter Form in dem Speicher abgelegt ist.

Ein solches Verfahren ist aus der EP 0 112 461 A1 bekannt. Dort sind die Eigenschaften einer in einer Identitätskarte enthaltenen Antenne in verschlüsselter Form in der Karte gespeichert. Dieser Wert wird bei einer Echtheitsprüfung mit einem Wert verglichen, der sich aus den aktuell gemessenen Antenneneigenschaften, auf die ebenfalls der Verschlüsselungsalgorithmus angewendet wurde, ergibt.

Die EP 0 112 461 A1 läßt nun offen, ob der Vergleich und die Bildung der Codezahl in der Karte oder im Terminal stattfinden. Im ersten Fall ergibt sich das Problem, daß eine gefälschte Karte immer ein positives Vergleichsergebnis melden kann unabhängig vom tatsächlichen Vergleichsergebnis, so daß keine wirkliche Echtheitsprüfung stattfinden muß. Im zweiten Fall muß auch im messenden Terminal der geheime Algorithmus und die Geheimzahl vorliegen, was ein Sicherheitsrisiko darstellt.

Die EP 0 583 709 A1 beschreibt ebenfalls ein Echtheitserkennungsverfahren, bei dem zu messende physikalische Eigenschaften verschlüsselt abgespeichert werden und später mit neu zu messenden nach einer Entschlüsselung verglichen werden. Dabei kann auch ein asymmetrisches Ver- und Entschlüsselungsverfahren Anwendung finden.

Datenträger, die einem Echtheitsprüfungsverfahren unterzogen werden sollen, weisen meist einen Zähler auf, dessen Stand einen Geldwert repräsentiert und liefern daher einen Kopier- bzw. Nachbauanreiz. Aber auch bei der Verwendung solcher Datenträger bei Zutrittskontrollsystemen oder im Bereich der Sozialversicherungen ist ein solcher Anreiz gegeben.

Es ist möglich, einen Halbleiterchip identisch zu kopieren, so daß auch alle Geheimzahlen und verschlüsselten Daten wie das verschlüsselte physikalische Merkmal auf der Kopie enthalten sind, ohne den genauen Schaltungsaufbau verstanden zu haben, so daß hier ein großes Sicherheitsrisiko vorliegt. Die Durchführung der bekannten Echtheitsprüfungen mittels eines physikalischen Merkmals, das bei jedem Datenträger anders und möglichst kompliziert ist und somit sehr schwer nachzubauen ist, ist jedoch ein erster Schritt zu einer höheren Fälschungssicherheit, da ein Betrüger zwar einen Chip nachbauen kann aber kaum eine dazu passende Karte mit dem richtigen physikalischen Merkmal.

Bei den bekannten Verfahren muß in jedem Terminal der Ver bzw. Entschlüsselungsalgorithmus sowie die geheim zu haltende oder die öffentliche Schlüsselzahl vorhanden sein, um entweder die gemessenen Daten ebenfalls zu verschlüsseln und die verschlüsselten Formen zu vergleichen oder die aus der Karte ausgelesene verschlüsselte Form der Daten zu entschlüsseln und die Originaldaten zu vergleichen. Dies birgt jedoch erhebliche Sicherheitsrisiken, da es einem Betrüger Anreize bietet, Terminals zu entwenden und zu analysieren.

Das der Erfindung zugrunde liegende Problem ist also, ein Verfahren zur Echtheitsprüfung von Datenträgern anzugeben, das ein hohes Maß an Sicherheit bietet und die oben genannten Nachteile vermeidet.

Das Problem wird durch ein Verfahren gemäß Anspruch 1 gelöst. Eine vorteilhafte Weiterbildung ist im Unteranspruch angegeben.

Beim erfindungsgemäßen Verfahren wird der Vergleich im Terminal durchgeführt, ohne daß der geheime Schlüssel im Terminal vorhanden sein muß, da eine asymmetrische Verschlüsselung verwendet wird. Asymmetrische Verschlüsselung bedeutet, daß zum Verschlüsseln ein anderer Schlüssel verwendet wird als zum Entschlüsseln und selbst bei Kenntnis des jeweils anderen keiner der beiden Schlüssel berechnet werden kann. Der Entschlüsselungsschlüssel kann allgemein bekannt sein und wird in der Regel jedermann zugänglichen Dateien - beispielsweise aus dem Internet - entnehmbar sein.

Der öffentliche Schlüssel ist hierbei einem bestimmten speziellen Kartensystembetreiber, wie Kreditkartengesellschaften oder Banken und Versicherungen zugeordnet. Wesentlich beim erfindungsgemäßen Verfahren ist, daß der geheime, nur dem Systembetreiber bekannte Schlüssel nicht aus dem öffentlichen Schlüssel berechnet werden kann. Als Beispiel für ein asymmetrisches Verschlüsselungsverfahren wird das RSA-Verfahren genannt.

Wenn lediglich das verschlüsselte Merkmal zum Terminal übertragen wird, ist es nötig, daß im Terminal die öffentlichen Schlüssel sämtlicher Systembetreiber gespeichert oder über beispielsweise einen Intranetanschluß zugreifbar sind, die sich dieses Terminals bedienen wollen. Um diesen Nachteil zu vermeiden, ist in Weiterbildung der Erfindung der öffentliche, spezielle Schlüssel in verschlüsselter Form in der Karte abgespeichert, wobei zu dessen Verschlüsselung ein geheimer, globaler Schlüssel verwendet wurde. Dieser geheime, globale Schlüssel ist beispielsweise nur Zentralbanken oder sonstigen hoheitlichen Institutionen bekannt. Er wird für die Verschlüsselung jedes öffentlichen, speziellen Schlüssels verwendet. In der Karte ist außerdem der unverschlüsselte, öffentliche, spezielle Schlüssel gespeichert.

Im Terminal ist dann lediglich der zum geheimen, globalen Schlüssel gehörende öffentliche, globale Schlüssel enthalten, mittels dem die verschlüsselte Form des öffentlichen, speziellen Schlüssels entschlüsselt und mit dem Originalschlüssel, der ja ebenfalls gespeichert ist, verglichen wird. Eine Übereinstimmung zeigt dann, daß zum Verschlüsseln des öffentlichen, speziellen Schlüssels der richtige geheime, globale Schlüssel verwendet wurde und bedeutet eine Zertifizierung beispielsweise der Zentralbank, die somit dafür bürgt, daß der öffentliche, spezielle Schlüssel korrekt ist und zum Entschlüsseln des physikalischen Merkmals verwendet werden kann.

Als physikalisches Merkmal kann bei kontaktlosen Datenträgern eine Antenneneigenschaft wie beispielsweise die Güte oder auch Kombinationen solcher Eigenschaften verwendet werden. Weitere Möglichkeiten für physikalische Merkmale sind in der EP 0 676 073 B1 und der EP 0 602 643 A2 angegeben. Dort werden ein einstellbares Widerstandsnetzwerk bzw. die Eigenschaften einer EEPROM-Zelle als kartenspezifisches, physikalisches Merkmal vorgeschlagen.

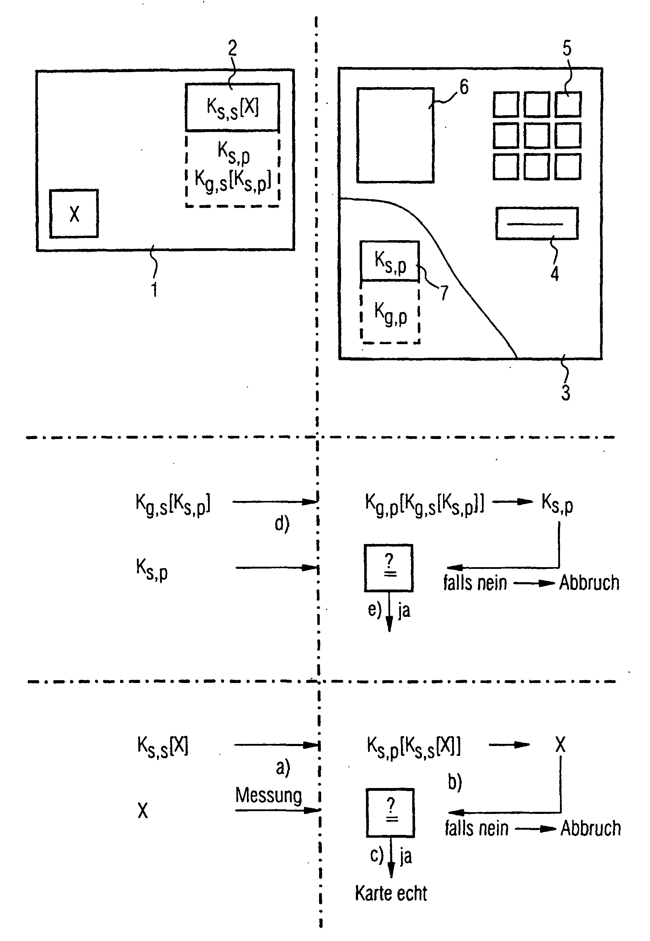

Die Erfindung wird nachfolgend anhand eines Ausführungsbeispiels mit Hilfe einer Figur näher beschrieben. Die Figur zeigt dabei in schematischer Weise eine Chipkarte und ein Lese/Schreib-Terminal sowie ein Ablaufdiagramm des erfindungsgemäßen Verfahrens.

Die Figur zeigt eine Chipkarte 1, die einen Speicher 2, der beispielsweise in einem Halbleiterchip realisiert sein kann, sowie ein physikalisches Merkmal X aufweist.

Trotz der Darstellung einer Chipkarte ist die Erfindung keineswegs auf eine solche Ausgestaltung eingeschränkt, sondern kann bei beliebigen Formen von Datenträgern angewendet werden.

Im Speicher 2 ist zumindest die mit einem ersten geheimen, speziellen Schlüssel Kₛₛ verschlüsselte Form K_{s,s}[X] des Merkmals X enthalten. Wie durch eine strichliert dargestellte Vergrößerung des Speichers 2 angedeutet ist, kann in Weiterbildung der Erfindung außerdem ein zweiter öffentlicher, spezieller Schlüssel K_{s,p} sowie die verschlüsselte Form dieses zweiten Schlüssels K_{g,s}[K_{s,p}] enthalten sein. Zum Verschlüsseln des zweiten Schlüssels K_{s,p} wurde ein dritter geheimer, globaler Schlüssel K_{g,s} verwendet.

Durch eine senkrechte, strichlierte Linie von der Chipkarte 1 getrennt ist ein Terminal 3 dargestellt. Dieses weist einen Aufnahmeschacht 4 für die Chipkarte 1 auf sowie eine Tastatur 5 und ein Display 6. Das Terminal 3 weist außerdem einen Speicher 7 auf, in dem wenigstens temporär der zweite öffentliche, spezielle Schlüssel K_{s,p} gespeichert ist. Das Terminal 3 kann diesen Schlüssel einerseits permanent gespeichert haben, aber auch für jede Echtheitsprüfung über einen Datenleitung von einer Zentrale oder aus einem Datennetz holen. Da es sich bei dem zweiten Schlüssel K_{s,p} um einen speziellen Schlüssel handelt, der einem bestimmten Systembetreiber, wie beispielsweise einer Kreditkartenfirma zugeordnet ist, das Terminal 3 jedoch möglicherweise für Karten unterschiedlicher Systembetreiber anwendbar sein soll, wäre es nötig, verschiedene zweite öffentliche, spezielle Schlüssel gespeichert zu halten. Stattdessen kann in Weiterbildung der Erfindung ein vierter öffentlicher, globaler Schlüssel K_{g,p} gespeichert sein, was durch eine strichlierte Erweiterung des Speichers 7 angedeutet ist.

Sowohl die Chipkarte 1 als auch das Terminal 3 können weitere Einrichtungen, wie Mikroprozessoren oder Kryptoprozessoren enthalten. Die Übertragung von der Chipkarte 1 zum Terminal 3 kann sowohl in kontaktbehafter Weise als auch kontaktlos, beispielsweise über induktive Kopplung erfolgen. Das Terminal 3 weist außerdem eine Meßeinrichtung auf, um das physikalische Merkmal X der Chipkarte 1 ermitteln zu können. All diese Details sind nicht in der Figur dargestellt, da sie bereits aus dem Stand der Technik bekannt sind und im Detail nicht zur Erfindung beitragen.

In der Figur ist unter der Darstellung der Chipkarte 1 und des Terminals 3 der Ablauf des erfindungsgemäßen Verfahrens dargestellt. Zwischen horizontalen strichlierten Linien ist die Weiterbildung der Erfindung dargestellt, falls im Terminal 3 lediglich ein öffentlicher, globaler Schlüssel enthalten ist. In diesem Fall wird in einem Verfahrensschritt d) die verschlüsselte Form des öffentlichen, speziellen Schlüssels sowie der öffentliche, spezielle Schlüssel selbst von der Chipkarte 1 zum Terminal 3 übertragen, im Terminal 3 mittels des öffentlichen, globalen Schlüssels der öffentliche, spezielle Schlüssel berechnet und mit dem übertragenen öffentlichen, speziellen Schlüssel im Verfahrensschritt e) verglichen. Falls keine Übereinstimmung gegeben ist erfolgt ein Abbruch des Verfahrens.

Bei Übereinstimmung wird im Verfahrenschritt a) die verschlüsselte Form des physikalischen Merkmals von der Chipkarte 1 zum Terminal 3 übertragen sowie das physikalische Merkmal selbst vom Terminal 3 gemessen. Im Terminal wird dann mittels des zuvor übertragenen und als richtig erkannten öffentlichen, speziellen Schlüssels K_{s,p} das verschlüsselte physikalische Merkmal entschlüsselt und mit dem gemessenen verglichen.

Falls eine Übereinstimmung ergeben ist, wird die Karte im Verfahrensschritt c) als echt erkannt. Falls keine Übereinstimmung gegeben ist, erfolgt ein Abbruch des Verfahrens.

Bei Anwendung des erfindungsgemäßen Verfahrens brauchen in der Chipkarte 1 lediglich die verschlüsselten Formen des Merkmals X sowie des öffentlichen, speziellen Schlüssels und der öffentliche, spezielle Schlüssel selbst gespeichert sein. Der geheime, spezielle und der geheime, globale Schlüssel brauchen in der Chipkarte 1 nicht vorhanden zu sein, sondern müssen lediglich dem Systembetreiber bzw. der zertifizierenden Stelle bekannt sein. Da die geheimen Schlüssel jedoch eindeutig den zugehörigen öffentlichen Schlüsseln zugeordnet sind, ist es nicht möglich, eine Karte nachzubauen, die die korrekten verschlüsselten Formen der zur Echtheitsprüfung benötigten Daten enthalten.

Auch eine Entwendung und Analyse eines Terminals 3 seitens eines Betrügers führt nicht zum gewünschten Erfolg, da auch dort lediglich die öffentlichen und somit auch andersweitig erhaltbaren Schlüssel gespeichert sind. Sowohl im Datenträger als auch im Terminal können die geheimen, speziellen und der geheime, globale Schlüssel enthalten sein, obwohl dies nicht nötig ist, allerdings würde dies zu einem Sicherheitsverlust führen.

## Patentansprüche

1. Verfahren zur Echtheitsprüfung eines Datenträgers (1), insbesondere einer Chipkarte,
der zumindest einen Speicher (2) aufweist, wobei ein spezifisches, physikalisches Merkmal (X) des Datenträgers (1) in verschlüsselter Form (K_{s,s}[X]) in dem Speicher (2) abgelegt ist, und das Merkmal (X) mit einem ersten speziellen, geheimen Schlüssel (K_{s,s}) verschlüsselt ist,
wobei im Datenträger (1) zusätzlich ein zum ersten speziellen, geheimen Schlüssel (K_{s,s}) gehörender zweiter spezieller, öffentlicher Schlüssel (K_{s,p}) und die mit einem dritten globalen, geheimen Schlüssel (K_{g,s}) verschlüsselte Form des zweiten Schlüssels (K_{g,s}[K_{s,p}]) gespeichert ist,
mit folgenden Schritten:
a) ein Lese/Schreib-Terminal (3) liest den zweiten Schlüssel und die verschlüsselte Form des zweiten Schlüssels (K_{s,p}, K_{g,s}[K_{s,p}]) aus dem Datenträger und errechnet mit einem im Terminal (3) vorhandenen vierten globalen, öffentlichen Schlüssel (K_{g,p}) den zweiten Schlüssel (K_{s,p}=K_{g,p}[K_{g,s}[K_{s,p}]]) und vergleicht diesen mit dem gelesenen zweiten Schlüssel,
b) bei Übereinstimmung werden die Verfahrensschritte c) bis e) ausgeführt, bei Nicht-Übereinstimmung erfolgt ein Abbruch des Verfahrens,
c) das Lese/Schreib-Terminal (3) liest das verschlüsselte Merkmal (K_{s,s}[X]) aus dem Speicher (2) des Datenträgers (1) und ermittelt das physikalische Merkmal (X) durch Messung,
d) das Lese/Schreib-Terminal (3) errechnet mit dem zweiten Schlüssel (K_{s,p}) das Merkmal (X=K_{s,p}[K_{s,s}[X]]) und vergleicht es mit dem gemessenen Merkmal (X)
e) bei Übereinstimmung wird die Echtheit des Datenträgers (1) festgestellt, bei Nicht-Übereinstimmung erfolgt ein Abbruch des Verfahrens.

## Claims

1. Method for verifying the authenticity of a data carrier (1), in particular a smart card,
which has at least one memory (2), a specific physical feature (X) of the data carrier (1) being stored in encrypted form (K_{s,s}[X]) in the memory (2), and the feature (X) being encrypted with a first special secret key (K_{s,s}),
in addition, a second special public key (K_{s,p}) belonging to the first special secret key (K_{s,s}) and the form of the second key (K_{g,f}[K_{s,p}]) encrypted with a third global secret key (K_{g,s}) being stored in the data carrier (1),
having the following steps:
a) a read/write terminal (3) reads the second key and the encrypted form of the second key (K_{s,p} K_{g,s}[K_{s,p}]) from the data carrier and, with a fourth global public key (K_{g,p}) present in the terminal (3), calculates the second key (K_{s,p} = K_{g,p}[K_{g,s}[K_{s,p}]]) and compares this with the second key as read,
b) in the event of agreement, method steps c) to e) are performed, in the case of non-agreement the method is aborted,
c) the read/write terminal (3) reads the encrypted feature (K_{s,s}[X]) from the memory (2) of the data carrier (1) and determines the physical feature (X) by means of measurement,
d) with the second key (K_{s,p}), the read/write terminal (3) calculates the feature (X = K_{s,p}[K_{s,s}[X]]) and compares it with the measured feature (X)
e) in the event of agreement, the authenticity of the data carrier (1) is determined, and in the event of non-agreement, the method is aborted.

## Revendications

1. Procédé de vérification de l'authenticité d'un support (1) de données, notamment d'une carte à puce,
qui comporte au moins une mémoire (2), une caractéristique (X) spécifique physique du support (1) de données étant mémorisée dans la mémoire (2) sous une forme (K_{s,s}[X]) chiffrée et la caractéristique (X) étant chiffrée par une première clé (K_{s,s}) spéciale secrète,
une deuxième clé (K_{s,p}) spéciale publique appartenant à la première clé (K_{s,s}) spéciale secrète et la forme, chiffrée par une troisième clé (K_{g,s}) globale secrète, de la deuxième clé (K_{g,s}[K_{s,p}]) étant mémorisées en outre dans le support (1) de données,
comprenant les stades suivants :
a) un terminal (3) de lecture/écriture lit la deuxième clé et la forme chiffrée de la deuxième clé (K_{s,p},K_{g,s}[K_{s,p}]) dans le support de données et calcule par une quatrième clé (K_{g,p}) globale publique présente dans le terminal (3) la deuxième clé (K_{s,p}=K_{g,p}[K_{g,s}[K_{s,p}]]) et la compare à la deuxième clé lue,
b) si il y a coïncidence on effectue les stades c) à e) du procédé, s'il n'y a pas coïncidence on interrompt le procédé,
c) le terminal (3) de lecture/écriture lit la caractéristique (K_{s,s}[X]) chiffrée dans la mémoire (2) du support de données et détermine la caractéristique (X) physique par mesure,
d) le terminal (3) de lecture/écriture calcule par la deuxième clé (K_{s,p}) la caractéristique (X=K_{s,p}[K_{s,s}[X]]) et la compare à la caractéristique (X) mesurée,
e) s'il y a coïncidence, l'authenticité du support de données est constatée et s'il n'y a pas coïncidence, le procédé est interrompu.
